# EUROPEAN PATENT APPLICATION

(11) **EP 1 787 502 A1**
(43) Date of publication of application: **23.05.2007**
(21) Application number: 06077036.9
(22) Date of filing: 16.11.2006
(51) Int. Cl.: A01B 45/02

(54) **Ground working apparatus and pin holder therefor**

(30) Priority: 16.11.2005 NL 1030449
(71) Applicant: Redexim Handel-en Exploitatie Maatschappij B.V., 3702 AC Zeist (NL)
(72) Inventor: De Bree, Cornelis Hermanus Maria, 3971 ND Driebergen (NL)
(74) Representative: Louet Feisser, Arnold

(57) **Abstract**

The invention relates to a ground working apparatus for working ground, comprising a frame, moving means mounted on the frame for moving the ground working apparatus over a ground surface, and a number of aerating means arranged on the frame, wherein the aerating means comprise at least one pin holder (12) bearing mounted on the aerating means and a number of pins (30) gripped by the pin holder (12), wherein the aerating means are adapted to insert the pins (30) into the ground. The invention is characterized in that the pin (30) has a collar (29), that the pin holder (12) has at least one enclosing chamber (26) for the collar of the pin, and that the pin holder (12) further comprises an enclosing means (34) connectable to the pin holder (12) for the purpose of enclosing the collar (29) of a number of pins (30) in the enclosing chamber (26). The invention further relates to a pin holder (12) for a number of pins (30) for an aerating apparatus, comprising connecting means for connecting the pin holder to aerating means of the aerating apparatus, at least one enclosing chamber (26) for a collar (29) of the pins (30), and an enclosing means (34) connectable to the pin holder (12) for enclosing the collar of a number of pins in the enclosing chamber (26), wherein the enclosing chamber (26) has an insertion direction for the collar (29) of the pin (30), and the enclosing means (34) is adapted to block the insertion direction of the collar (29).

## Description

The invention relates to a ground working apparatus for working ground, comprising a frame, moving means mounted on the frame for moving the ground working apparatus over a ground surface, and a number of aerating means arranged on the frame, wherein the aerating means comprise at least one pin holder bearing mounted on the aerating means, and a number of pins gripped by the pin holder, wherein the aerating means are adapted to insert the pins into the ground. The invention also relates to a pin holder for a number of pins for a ground working apparatus, comprising connecting means for connecting the pin holder to aerating means of the aerating apparatus.

Such an apparatus for working ground, such as aerating ground with pins, is known from DE 43 33 310. The known aerating apparatus is movable over a ground surface. The operation of the known ground working apparatus described therein is equally applicable to the ground working apparatus according to the invention.

A motor which serves as drive means for the moving means can be present on the ground working apparatus. The aerating apparatus can also be connectable to a tractor. A driving for the aerating apparatus can be produced via a tractor-driven shaft. The device can be coupled to this shaft via a transmission, and this shaft forms a drive means.

The ground working apparatus has a frame with aerating means. These aerating means comprise among other parts a number of arms bearing mounted on the frame. The arms form two sides of a parallelogram construction from which the pin holder with pins is suspended. The arms are coupled to a rotatable crankshaft with which the pin holder can be guided in a movement in the direction of the ground for working. Different adapting and coupling means can be provided for modifications and adjustments of the final movement of the pins and pin holder relative to the frame.

The pin holder of the known apparatus is provided with a number of recesses in which the outer end of a number of pins is received. The pins protrude from the pin holder and, controlled by the parallelogram suspension, can be inserted into the ground surface. Further adjustments of the suspension enable an aerating effect in the ground. The outer ends of the pins are clamped in the receiving space of the pin holder by a bolt. The bolt can be released, thereby ending clamping of the pin. The pin can then be removed. This is necessary for instance in the case of breakage or for replacement of the pins. Different terrains also require the use of pins of different size. In order to reduce acquisition costs the same ground working apparatus is often used, wherein the pins are then replaced.

An object of the invention in accordance with a first aspect is to speed up the replacement of a or a number of pins. According to another aspect, a further object is to simplify the operations necessary to replace a or a number of pins.

At least one of the objectives of the invention is achieved in that the pin has a collar, and the pin holder has at least one cavity, preferably an enclosing chamber, for the collar of the pin. The apparatus preferably further comprises an enclosing means connectable to the pin holder for the purpose of enclosing the collar of a number of pins in the enclosing chamber. Because the pin has a collar, this collar can be accommodated in an enclosing chamber of the pin holder. The collar and enclosing chamber co-act and limit the degrees of freedom of the pin. The collar makes possible the placing of a pin in the enclosing chamber. Because the cavity, which becomes a part of the final enclosing chamber, and the collar co-act, the pin is partially pre-positioned. It is hereby possible to position a number of pins while the pins are not yet fixed. A number of pins can then be fixed simultaneously with an enclosing means. The enclosing means is connected to the pin holder such that the collar can no longer come out of the enclosing chamber.

It is noted that a cavity and an enclosing chamber according to the invention will often have a cross-section that is greater than the cross-section of the pin in the lengthwise direction of this pin.

More than one pin can be mounted and removed in one operation by means of the enclosing means. Replacement of the pins can then be carried out more quickly. The freedom of movement of a number of pins is limited with the operation. Owing to the collar co-acting with the enclosing chamber it is possible to pre-position a number of pins, thereby allowing a plurality of pins to be enclosed simultaneously.

According to a preferred embodiment, the enclosing chamber has an insertion direction for the collar of the pin, and the enclosing means is adapted to block the collar in the insertion direction. A number of pins are fixed in a position of use by placing the enclosing means in the gripping position on the collar or collars of the pins. The insertion direction or removal direction is blocked with the enclosing means.

It is a further advantage that the enclosing means comprises a gripping means which is releasable from the pin holder. The enclosing means can hereby be embodied as a bolt having a shank provided with screw thread. Such an enclosing means can be manufactured at low cost and easily replaced in the case of wear.

The enclosing means preferably forms at least one side of the enclosing chamber. The enclosing chamber encloses the collar of the pin in the position of use of pin holder and pins. A part of the enclosing chamber can be formed by the enclosing means to be arranged. The enclosing means then lies against the collar of the enclosed pin. When the enclosing means is removed, a side of the chamber is left clear and the collar can be removed along this side from the enclosing chamber. Without the enclosing means the enclosing chamber of the pin holder is a cavity in the pin holder into which the collar of the pin can be placed. The cavity forms a pre-positioning means for the collar and for the pin.

According to an advantageous embodiment of the invention, the enclosing means comprises a lock. The enclosing means, for instance a rod or bracket which is for instance connected pivotally to the pin holder, and which rod lies against the pin particularly at or close to the collar when this latter is enclosed in the enclosing chamber, can hereby be fixed with these pins in the enclosing position. The locking can for instance be a clamping or a controllable hooking connection.

The pin holder preferably has at least a number of enclosing chambers, in each case for the collar of one pin. The pins can thus be arranged in and removed from the enclosing chambers in individually placeable and removable manner.

The pin holder preferably comprises a first part bearing mounted on the aerating means and a releasable second part. The second part can preferably be connected to the first part. The second part comprises the enclosing chamber or cavity in which the collar of the pin can be received. A separation is hereby obtained between the part of the pin holder connected to the aerating means, i.e. the first part, and the part connected to the pins, i.e. the second part. Due to this separation it becomes possible in simpler manner to adapt and apply a ground working apparatus for different processes, in particular by changing pins in each case. The second part can be a part of the enclosing means.

By applying the above stated measure the second part can further be separated from the first part connected fixedly to the aerating means. Particular in this manner all pins can be released from the pin holder with one operation.

A problem of the known coupling of the pins to the pin holder is that the removal of a pin is often very difficult. The pins or the screws may be rusted, whereby additional operations are necessary to enable replacement of the pin. According to a third aspect of the invention, a further object is to provide an improved coupling of the pins to the pin holder. This is achieved by applying the first and second parts. The second part, optionally in co-action with a separate enclosing means, is particularly suitable for enclosing and clamping the pins, while this whole second part is connected releasably to the first part. Should the release of a single pin from the second part not be possible because a determined obstruction has occurred, for instance due to rust, the whole second part can then be released from the first part. The second part can then be taken to a workspace and further processed there. An additional second part, a spare part, can replace the second part, whereby the ground working apparatus does not remain unused unnecessarily.

The pin holder preferably comprises a third part connectable to the second part. The enclosing chamber is preferably formed here by cavities of the second and third part being joined together. The collar is hereby accommodated between the second and third parts in the respective cavities, which together form the enclosing cavities. The enclosing means locks the position of the second and third part relative to each other, whereby the collars remain held in the enclosing space.

At least one of the first, second or third parts is preferably formed by a cast metal block. Such a block can be cast at low cost. The stiffness of such a block is considerable and can withstand the forces acting on the pins which occur during operation. The blocks can be prepared for the connections to be made between the respective blocks. Casting can take place wherein a recess, optionally with screw thread, is formed.

The connection of the respective parts or blocks preferably takes place by means of screw connections. Other releasable connections or couplings, such as sliding couplings, can also be applied.

In a particular embodiment a number of pins forms part of a pin body with one collar for this number of pins. The pin body can be placed in one step in the cavity of the pin holder, for instance by sliding the collar into the cavity. The placed collar can then be locked with an enclosing means, for instance a screw.

The invention also relates to a pin holder for a number of pins for an aerating apparatus, comprising connecting means for connecting the pin holder to aerating means of the aerating apparatus. The invention is characterized in that the pin holder has at least one enclosing chamber for a collar of the pins. In addition, the pin holder has an enclosing means connectable to the pin holder for enclosing the collar of a number of pins in the enclosing chamber. The enclosing chamber herein has an insertion direction for the collar of the pin. It is a further advantage that the enclosing means is adapted to block the insertion direction of the collar.

According to an aspect of the invention a pin holder is hereby obtained with which the changing of pins is facilitated, for instance in the case of breakage or when the ground working apparatus is used for a different operation. A plurality of pins can be fixed in one operation using the enclosing means, while the collar of the pin is used as means for pre-positioning the pin in the corresponding cavity of the pin holder. Even when the enclosing means is moved out of the locking position, the co-acting system of collar and cavity will maintain a determined pre-positioning of the pin.

Further embodiments of the pin holder are described in the foregoing. Reference is made here to the discussion above, wherein reference is made to the various further advantages of additional measures.

The invention will be further described with reference to the drawings, in which:
Figure 1 is a view of an aerating apparatus according to the invention,
Figure 2 is a perspective view of the detail according to II in figure 1,
Figures 3-4 show perspective views of a first embodiment of the pin holder according to the invention,
Figure 5 is a view of a cross-section along V-V in figure 3,
Figures 6-7 show perspective views of a second embodiment of the pin holder,
Figure 8 shows a view of a cross-section along VIII in figure 6,
Figure 9 shows a cross-sectional view of a third embodiment of a pin holder according to the invention,
Figure 10 is a perspective view of a fifth embodiment of the pin holder in a position of use, and
Figure 11 is a perspective view of the fifth embodiment in the uncoupled position.

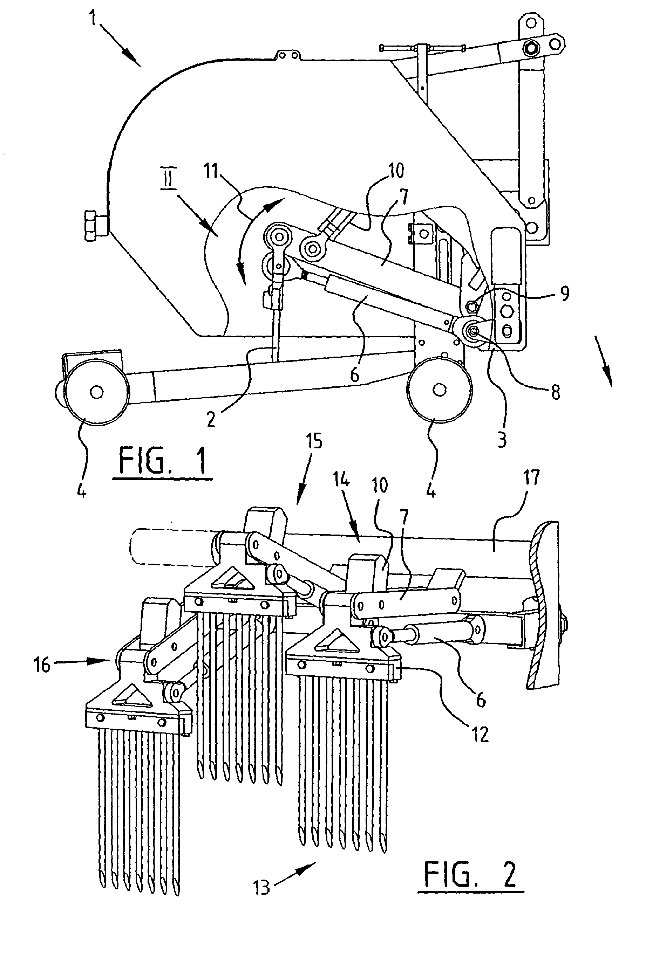

Figure 1 shows a ground working apparatus according to the invention. Apparatus 1 is suitable for aerating the ground by means of pins 2. The apparatus has a frame 3 on which moving means in the form of wheels 4 are mounted. The wheels are bearing mounted on the frame. The moving means can comprise a drive. The shown embodiment is however an apparatus 1 which can be coupled to a tractive vehicle such as a tractor (not shown). The coupling means for coupling to the tractor are not shown.

Via a transmission the aerating mechanism of apparatus 1 can be coupled to the drive present on the tractor. The aerating means are accommodated under hood 5 which is coupled to frame 3. The aerating means comprise two arms 6,7 which are bearing mounted on the frame. Arm 7 is bearing mounted on a crankshaft (not shown) via an arm 2. The crankshaft is bearing mounted on the frame. The crankshaft can be connected by means of a transmission to a drive, such as the drive of a driving vehicle.

When the crankshaft is driven, arm 7 will move substantially as according to arrow 11. Pin 2 is herein moved each time into the ground, where it performs an aerating process. Reference is made to DE 43 33 310 and to NL 1028670 for more details of the aeration. Both publications are included in this description by way of reference.

A detail of the aerating means is shown in figure 2. A plurality of units 14,15,16 of arms 6,7, pin holder 12 and pins 13 are arranged in the aerating apparatus. They are all connected to the crankshaft and will perform a reciprocal movement guided by the formed parallelogram construction. Different adjusting means are present for adjusting the movement of pin holder 12 and pins 13. The arms 7 of the respective units 14,15,16 are thus connected in each case to a shaft 17 which is adjustable by means of the spindle. The adjustability of shaft 17 relates to the relative position of shaft 17 in the frame. In a preferred embodiment this shaft can be rotated around an eccentric. Favourable aerating settings are hereby possible.

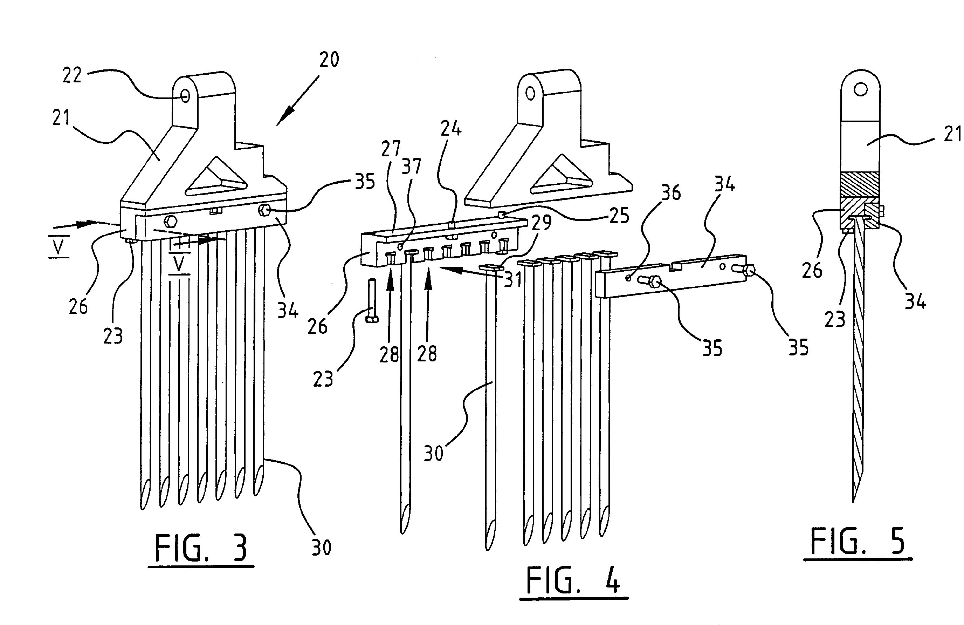

Pin holder 12 is bearing mounted on two arms 6,7 of the aerating means. In the shown embodiment the pin holder is a cast steel block. Details of the pin holder are shown in figure 3. The shown embodiment has a number of pins which are enclosed simultaneously. A single pin, in particular a bent pin, can be replaced easily. The insertion direction for placing of the pin in the receiving space is at right angles to the lengthwise direction of the pin. This results in a number of advantages in respect of replacement, particularly in the case of bent pins.

Figure 3 shows a view of a pin holder 20. According to this first embodiment pin holder 20 comprises three parts, each formed as a cast steel block. First part 21 can be coupled to the arms of the aerating means. A recess 22 can be used as receiving space for a shaft, around which shaft the pin holder 20 can pivot relative to arm 7.

First part 20 is further provided with a number of recesses, optionally provided with screw thread in which bolts 23-25 can engage. It is hereby possible to connect a second part 26 to first part 21. Part 21 is thus adapted to transmit force from the driven aerating means to the pin holder.

Second part 26 is a cast-iron block which can be connected to the first part. In addition to the coupling by means of bolts engaging on mutually aligned recesses in the respective parts, other coupling means can also be applied.

Second part 26 has a contact surface 27 which lies against the whole underside of first part 21. A full force transmission is hereby obtained between the parts.

Second part 26 is provided with a number of cavities 28. The cavities have a form corresponding to the form of collar 29 formed on an outer end of pin 30. Collar 29 is an integral part of pin 30. The collar is formed as a flange which protrudes on all sides of the pin and which protrudes at right angles to the lengthwise direction of pin 30.

Cavity 28 encloses about 80% of the collar and pin. The collar and pin can be inserted as according to arrow 31. In the shown embodiment this is the only way of positioning collar 29 in cavity 28. Due to the collar being received in cavity 28 the pin 29 is pre-positioned, as shown by pin 32. In the shown embodiment it is possible to pre-position seven pins in the respective cavities 28.

In order to remove the pins and collars from cavities 28, movement out of the cavity in a direction opposite to the insertion direction is necessary.

Third part 34 is provided with similar cavities 28 on the side which is directed toward second part 26 and which is not visible in figure 4. The cross-section according to figure 5 shows that cavity 28 of the second part has a depth corresponding to the pin thickness and the size of the protruding collar.

Third part 34 can be placed onto and over the parts of collar 29 of the pins protruding from cavity 28. The protruding parts are received in the cavities in part 34. An enclosing space for the collar and pin is obtained by joining together the cavities of the third part and the cavities 28 of the second part. The collar lies against the side of cavities 28 and the cavities in the third part. In addition, pins 29 lie against the sides of the cavities.

Third part 34 can be connected to second part 26 by arranging a number of bolts 35 through respective recesses 36 in the third part and in recesses 37 in second part 26. Joining together results in the collar and the pins being wholly enclosed and the degrees of freedom of movement being fully defined.

A plurality of pre-positioned pins 32 are fixed and made ready for use in one operation by arranging enclosing means 34.

Because the collar is fully enclosed a much more efficient transmission of force from pin holder to pin can be obtained compared to the prior art. Because the collar and the pin lie against a plurality of sides of the second and third parts 26, 34, the transmission of force is less concentrated at one location, thereby reducing the chance of damage.

From the position of use as according to figure 3 pins 30, when they are damaged, for instance broken, or when a different process has to be performed with apparatus 1, can be replaced by releasing enclosing means 34.

According to another aspect of the invention, pins 30 can be replaced, even when enclosing means 34 is stuck fast due to for instance rusting, by releasing the connection between second part 26 and first part 21. The whole block of second and third part 26,34 can be uncoupled and replaced by a similar block with other pins.

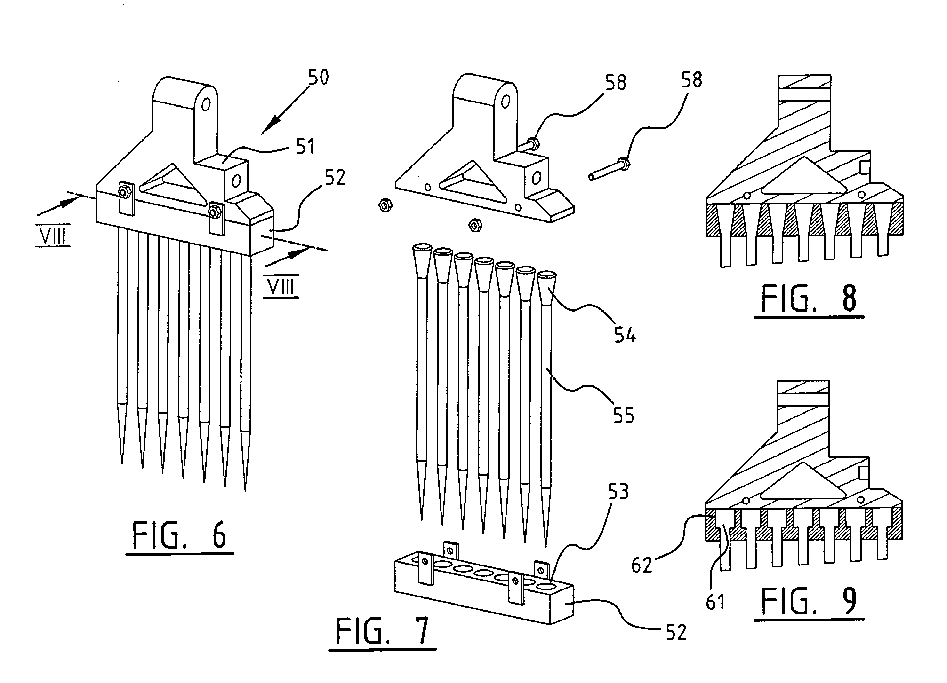

Figure 6 shows another embodiment. Pin holder 50 is formed by two parts 51,52. First part 51 is comparable to first part 21 and is intended for coupling to the aerating means.

In the position of use a second part 52 is coupled to first part 51 by means of suitable coupling means, such as for instance screws 58. Second part 52 is provided with cavities 53 in which the conical collars 54 of pins 55 can be received. The pins are pre-positioned by arranging the pins through the cavities and through the recess through second part 52.

By connecting second block 52 to the first block the respective cavity 53 is closed and forms an enclosing space for collar 54. A cross-section along VIII is shown in figure 8, in which the conical form of cavities 53 is clearly visible.

Figure 9 shows a construction of the pin holder similar to that of the second embodiment. However, collars 61 and cavities 62 have a rectangular form.

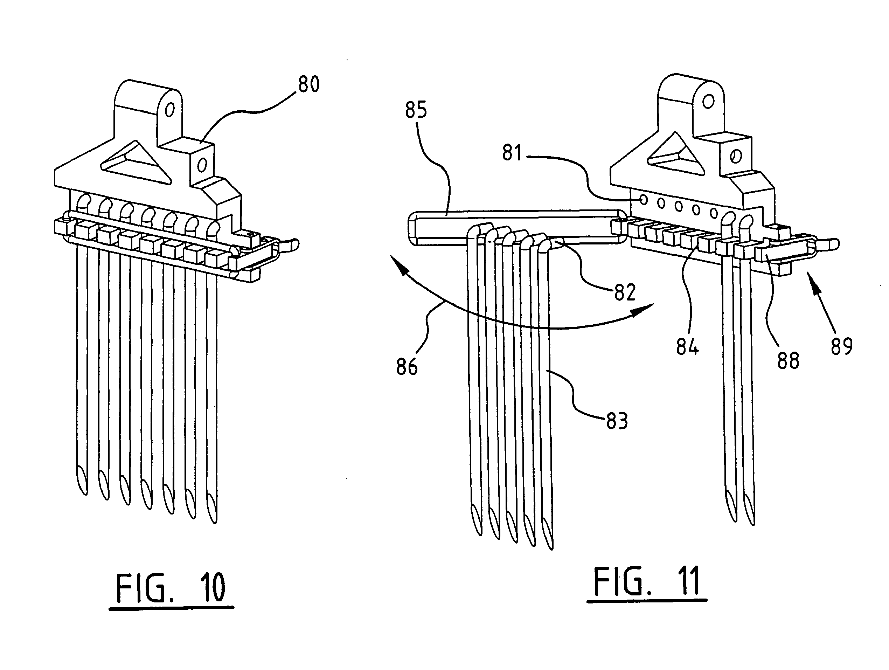

Figures 10 and 11 show two positions of use of a pin holder 80. Pin holder 80 has a form substantially similar to the above embodiments.

Cavities 81 are now formed in the pin holder. A bend 82 on the pin outer end of a pin 83 can be received in cavity 81. The bend forms part of a collar.

Pin holder 80 is further provided with a channel 84 in which the pin can be arranged. Channel 84 and cavity 81 together form the pre-positioning means of pin holder 80 with which pins 82 can be positioned even before they are clamped into the position of use.

A bracket 85 is connected pivotally to pin holder 81. By pivoting bracket 85 as according to arrow 86 the bracket can be engaged with a lock 87, in the form of a hook 88, which can be fastened with a per se known hinge mechanism 89.

Using bracket 85 the collar and the pins are enclosed, and the pin is deprived of the final degree of freedom. Bracket 85 forms the enclosing means according to the invention.

The invention is described on the basis of a number of embodiments. It will be apparent that different variants are possible within the scope of the invention.

## Claims

1. Ground working apparatus for working ground, comprising a frame, moving means mounted on the frame for moving the ground working apparatus over a ground surface, and a number of aerating means arranged on the frame, wherein the aerating means comprise at least one pin holder bearing mounted on the aerating means and a number of pins gripped by the pin holder, wherein the aerating means are adapted to insert the pins into the ground, **characterized in that** the pin has a collar, that the pin holder has at least one enclosing chamber for the collar of the pin, and that the pin holder further comprises an enclosing means connectable to the pin holder for the purpose of enclosing the collar of a number of pins in the enclosing chamber.

2. Ground working apparatus as claimed in claim 1, **characterized in that** the enclosing chamber has an insertion direction for the collar of the pin, and that the enclosing means is adapted to block the collar in the insertion direction.

3. Ground working apparatus as claimed in claim 1 or 2, **characterized in that** the enclosing means comprises a gripping means which is releasable from the pin holder.

4. Ground working apparatus as claimed in any of the foregoing claims, **characterized in that** the enclosing means forms at least one side of the enclosing chamber.

5. Ground working apparatus as claimed in any of the foregoing claims, **characterized in that** the enclosing means comprises a lock.

6. Ground working apparatus as claimed in any of the foregoing claims, **characterized in that** the pin holder has at least a number of enclosing chambers, in each case for the collar of the pins.

7. Ground working apparatus as claimed in any of the foregoing claims, **characterized in that** the pin holder comprises a first part bearing mounted on the aerating means and a second part which can be connected to the first part, wherein the second part comprises the enclosing chamber.

8. Ground working apparatus as claimed in any of the foregoing claims, **characterized in that** the pin holder comprises a third part connectable to the second part, wherein the enclosing chamber is formed by cavities of the second and third part being joined together.

9. Ground working apparatus as claimed in any of the foregoing claims, **characterized in that** at least one of the first, second or third parts is formed by a cast metal block.

10. Ground working apparatus as claimed in any of the foregoing claims, **characterized in that** a number of pins forms part of a pin body with one collar for a number of pins.

11. Pin holder for a number of pins for an aerating apparatus, comprising connecting means for connecting the pin holder to aerating means of the aerating apparatus, at least one enclosing chamber for a collar of the pins, and an enclosing means connectable to the pin holder for enclosing the collar of a number of pins in the enclosing chamber, wherein the enclosing chamber has an insertion direction for the collar of the pin, and the enclosing means is adapted to block the insertion direction of the collar.
